# EUROPÄISCHE PATENTANMELDUNG

(11) **EP 0 641 522 A2**
(43) Veröffentlichungstag der Anmeldung: **08.03.1995**
(21) Anmeldenummer: 94202106.4
(22) Anmeldetag: 19.07.1994
(51) Int. Cl.: A23L 3/36, F25C 1/00, B01J 2/06

(54) **Verfahren und Vorrichtung zum Pellet-Gefrieren von schütt und fliessfähigen Stoffen**

(30) Priorität: 30.08.1993 DE 4329110
(71) Anmelder: Buse Gase GmbH & Co., D-53557 Bad Hönningen (DE)
(72) Erfinder: Wayermanns, Günther, D-47239 Duisburg (DE)
(74) Vertreter: Berdux, Klaus, Dipl.-Ing.

(57) **Zusammenfassung**

Die Erfindung betrifft ein Verfahren und eine Vorrichtung zum Pellet-Gefrieren von schütt- und fließfähigen Stoffen in einem tiefsiedenden verflüssigten Gas (11), bei der das verflüssigte Gas im Inneren eines isolierten Gehäuses (1) angeordnet ist, das eine Öffnung zum Einleiten des zu gefrierenden Stoffes besitzt. Zum Erzeugen einer wasserfallartigen Strömung (12), in der kleine Tropfen bei geringem Oberflächenbedarf des Tauchbades einzeln einfrierbar sind, befindet sich erfindungsgemäß im Inneren des Gehäuses (1) ein Reaktionsrohr (2), mit am unteren Ende angeordnetem Rührwerk (3), über dessen Öffnung (18) die Eintragvorrichtung (13) für den zu gefrierenden Stoff angeordnet ist.

## Beschreibung

Die Erfindung betrifft ein Verfahren und eine Vorrichtung zum Pellet-Gefrieren von schütt- und fließfähigen Stoffen nach dem Oberbegriff des Anspruches 1.

Das Gefrieren schütt- und fließfähiger Stoffe geschieht in der Regel so, daß die Stoffe beispielsweise in Form von Tropfen direkt in ein Bad aus einem tiefsiedenden verflüssigten Gas, gewöhnlich Stickstoff, eingeleitet und dort gefroren werden. Zum Transport durch solche Tauchbäder und zur Entnahme der gefrorenen Stoffe aus den Tauchbädern werden Transportbänder verwendet. Eine solche Einrichtung zeigt die DE-PS 37 11 169. Solche Vorrichtungen sind für eine kontinuierliche Produktion in industriellem Maßstab bei mittleren bis großen Tropfengrößen gut geeignet. Insbesondere das Tauchbad mit dem zugehörigen Transportband erfordert jedoch einen großen Raumbedarf, wenn kleine Tropfen eingefroren werden sollen, weil diese vom Eindringen bis zum vollständigen Ausgefrieren im Stickstoffbad von einem Gaspolster umgeben sind und die zur Vermeidung des Verschmelzens der Tropfen erforderliche Vereinzelung im Stickstoffbad mit kleiner werdenden Tropfen zu einem größeren Oberflächenbedarf führt.

Desweiteren können diese bekannten Vorrichtungen nicht für den Ex-Schutz-Bereich modifiziert werden, weil systembedingt bei den mechanisch bewegten Teilen eine elektrische Aufladung oder Funkenbildung nicht ausgeschlossen werden kann.

Der Erfindung liegt daher die Aufgabe zugrunde, ein Verfahren und eine Vorrichtung zum Pellet-Gefrieren von schütt- und fließfähigen Stoffen zu schaffen, mit welcher alle Tropfengrößen, insbesondere kleine Tropfen, bei geringem Oberflächenbedarf des Tauchbades und der Transporteinrichtung einzeln einfrierbar sind.

Ausgehend von dem im Oberbegriff des Anspruches 1 berücksichtigten Stand der Technik ist diese Aufgabe erfindungsgemäß gelöst mit den im kennzeichnenden Teil der Ansprüche 1 und 3 angegebenen Merkmalen.

Vorteilhafte Weiterbildungen der Erfindung sind in den Unteransprüchen angegeben.

An die Stelle eines langgestreckten stationären Tauchbades tritt daher bei der erfindungsgemäßen Vorrichtung ein Reaktionsrohr, über dessen Rand das wasserfallartig strömende, verflüssigte Gas von einem Rührwerk engesaugt wird. Der Transport und damit die Vereinzelung der kleinen Tropfen erfolgt somit durch das flüssige Gas selbst, dessen Geschwindigkeit über die Drehzahl des Rührwerkes eingestellt und kontrolliert werden kann. Die Aufenthaltsdauer des zu gefrierenden Stoffes kann somit vorgegeben werden. Der Durchsatz kann einfach an die Tropfengröße, nämlich über die Strömgeschwindigkeit des flüssigen Gases und die Tropfgeschwindigkeit, optimal eingestellt werden, ohne daß es zu Verschmelzungen der Tropfen beim Ausgefrieren kommt, weil die Tropfgeschwindigkeit geringer ist, als die für den Transport der Tropfen erforderliche Strömgeschwindigkeit des flüssigen Gases. Während bei üblichen Tauchbädern mit Transportbändern eine bestimmte Mindestgröße bei kleinen Tropfen aus funktionalen Gründen nicht unterschritten werden kann, kann die erfindungsgemäße Vorrichtung unabhängig von der Tropfengröße klein und kompakt ausgeführt werden.

Ein weiteres wichtiges Kriterium für eine optimale Verwendung ist das Betreiben der erfindungsgemäßen Vorrichtung im Ex-Schutz-Bereich, da keine Kontakte zwischen bewegten metallischen Teilen vorhanden sind. Die einzelnen Teile der vollständig sterilisierbaren Vorrichtung sind leicht zu demontieren und aufgrund nur weniger Einzelteile leicht zu reinigen. Alle verwendeten Materialien sind für den Lebensmittel- und Pharmazeutischenbereich zugelassen.

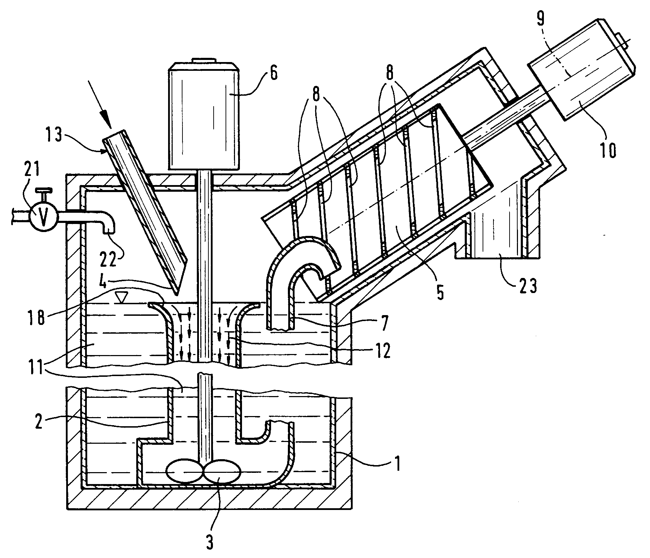

Ein Ausführungsbeispiel der Erfindung ist in der Zeichnung schematisch dargestellt und wird im folgenden näher beschrieben.

Die Zeichnung zeigt die Vorrichtung, die aus einem isolierten Gehäuse 1 besteht, in dem erfindungsgemäß sich ein Reaktionsrohr 2 metallisch kontaktlos mit am unteren Ende angeordneten Rührwerk 3 befindet. Reaktionsrohr 2 und Rührwerk 3 stehen vertikal in dem Gehäuse 1, der Antrieb erfolgt durch einen außerhalb des isolierten Gehäuses 1 angeordneten Motor 6. Das Reaktionsrohr 2 ist mit einem Förderrohr 7 verbunden, das sich über die trichterförmig ausgebildete Einlauföffnung 18 des Reaktionsrohres 2 hinaus bis zum oberen Ende des Gehäuses 1 und damit über das Niveau des Stickstoffs-flüssig 11 erstreckt. Förderrohr 7 mündet metallisch kontaktlos in einer als Trennvorrichtung 5 ausgebildeten Bandschnecke mit mindestens einem Siebboden 8. Die Drehachse 9 der Bandschnecke 5 ist schräg gegen die Horizontale geneigt, der Antrieb erfolgt über einen außerhalb des isolierten Gehäuses 1 angeordneten Motor 10. In dem Gehäuse 1 und dem Reaktionsrohr 2 wird ein Bad von flüssigem Stickstoff aufrecht erhalten. Die Tiefe des Bades 11 wird im Gehäuse 1 durch die Einlauföffnung 8 des Reaktionsrohres 2 und in dem Reaktionsrohr 2 und damit in dem Förderrohr 7 durch die Aufrechterhaltung einer wasserfallartigen Strömung 12 bestimmt. Die Tiefe des Bades 11 im Reaktionsrohr 2 ist in bestimmten Grenzen variabel und wird von Tropfenmenge und -größe beeinflußt.

Die Eintragvorrichtung 13 für den zu gefrierenden Stoff befindet sich direkt über der Einlauföffnung 8 des Reaktionsrohres 2 und ist mit ihrer Düse 4 auf die Strömung 12 gerichtet. In der Zeichnung ist eine Eintragvorrichtung 13 mit nur einer Auslauföffnung bzw. -düse 4 dargestellt, mehrere Eintragvorrichtungen und/oder mehrere Auslauföffnungen bzw. -düsen können jedoch vorgesehen werden.

Die Zufuhr des flüssigen Stickstoffes erfolgt über ein niveauabhängiges Ventil 21 mit auf die Badoberfäche gerichtete Einströmöffnung 22, der verdampfte Stickstoff strömt durch die Produktaustragsöffnung 23 im isolierten Gehäuse 1 ab.

Bei Betrieb saugt das Rührwerk 3 den im Reaktionsrohr 2 vorhandenen Stickstoff an. In dem Rührwerk 3 selbst wird der Druck zur Weiterförderung des Stickstoffes durch das Förderrohr 7 in die Bandschnecke 5 erzeugt. Von dort strömt der Stickstoff durch die Siebböden 8 zurück in das Gehäuse 1, so daß an der Einlauföffnung 18 des Reaktionsrohres 2 eine wasserfallartige Strömung 12 entsteht. Hierbei wird durch die Menge des im Reaktionsrohr 2 vorhandenen Stickstoffs-flüssig die wasserfallartige Strömung 12 dahingehend beeinflußt, daß verschiedenen Tropfengrößen bzw. -mengen äquivalente Stickstoffmengen zugeordnet sind. Der aus der Eintragvorrichtung 13 mit mindestens einer Düse 4 austretende zu gefrierende Stoff, beispielsweise ein Flüssigkeitsstrahl, wird in diese Strömung 12 gerichtet. Je nach Austrittsgeschwindigkeit des zu gefrierenden Stoffes an der Düse 4 der Eintragvorrichtung 13 zerstrahlt, zerwellt oder zertropft der zu gefrierende Stoff. Über die einstellbare Geschwindigkeit mit der der Stickstoff-flüssig im Reaktionsrohr 2 strömt und die Stickstoff-flüssig-Menge wird sichergestellt, daß die Flüssigkeitstropfen des zu gefrierenden Stoffes als einzelne Partikel fixiert werden. Die Austrittsgeschwindigkeit der zu gefrierenden Stoffe aus der Eintragvorrichtung 13 ist hierzu geringer als die Strömungsgeschwindigkeit der wasserfallartig in das Reaktionsrohr 2 stürzenden Strömung 12, so daß der zertropfte, zerwellte oder zerstrahlte zu gefrierende Stoff als Tropfen in die Strömung 12 eintritt und während der Weiterförderung mit hoher Geschwindigkeit ausgefriert. Jeder Flüssigkeitstropfen weist hierdurch einen relativen Abstand zum nächsten auf. Die in der wasserfallartigen Strömung 12 tiefgefrorenen Pellets strömen durch das Förderrohr 7 in die mit Siebböden 8 ausgestattete Bandschnecke 5, welches die abgeschiedenen Pellets aus der Produktaustragöffnung 23 des Gehäuses 1 austrägt.

## Patentansprüche

1. Verfahren zum Pellet-Gefrieren von schütt- und fließfähigen Stoffen in einem tiefsiedenden verflüssigten Gas, bei dem der zu gefrierende Stoff aus mindestens einer Eintragvorrichtung in das verflüssigte Gas eingeleitet wird,
gekennzeichnet durch eine wasserfallartige Strömung (12) des verflüssigten Gases, in die der zu gefrierende Stoff eingeleitet wird.

2. Vefahren nach Anspruch 1,
dadurch gekennzeichnet, daß
die Austrittsgeschwindigkeit des zu gefrierenden Stoffes aus der Eintragvorrichtung (13) geringer ist, als die Strömungsgeschwindigkeit der wasserfallartigen Strömung (12).

3. Vorrichtung zum Pellet-Gefrieren von schütt- und fließfähigen Stoffen in einem tiefsiedenden verflüssigten Gas, bei der das verflüssigte Gas im Inneren eines isolierten Gehäuses angeordnet ist, das eine Öffnung zum Einleiten des zu gefrierenden Stoffes besitzt,
dadurch gekennzeichnet, daß
sich im Inneren des Gehäuses (1) ein Reaktionsrohr (2) mit am unteren Ende angeordnetem Rührwerk (3) befindet, über dessen Öffnung (18) die Eintragvorrichtung (13) für den zu gefrierenden Stoff angeordnet ist.

4. Vorrichtung nach Anspruch 3,
dadurch gekennzeichnet, daß
das Reaktionsrohr (2) mit einem Förderrohr (7) verbunden ist,
daß das Förderrohr (7) oberhalb des Niveaus des verflüssigten Gases (11) endet und,
daß das Förderrohr (7) mit einer Trennvorrichtung (5) verbunden ist.

5. Vorrichtung nach Anspruch 3 oder 4,
dadurch gekennzeichnet, daß
die Trennvorrichtung (5) eine Bandschnecke ist, deren Drehachse (9) schräg gegen das Gehäuse (1) geneigt ist.

6. Vorrichtung nach einem der Ansprüche 3 bis 5,
dadurch gekennzeichnet, daß
die Bandschnecke mindestens einen Siebboden (8) aufweist.

7. Vorrichtung nach einem der Ansprüche 3 bis 6,
dadurch gekennzeichnet, daß
Reaktionsrohr (2), Rührwerk (3) und Trennvorrichtung (5) metallisch kontaktlos zueinander angeordnet sind.
